(19) **Europäisches Patentamt / European Patent Office / Office européen des brevets**

(11) **EP 2 144 200 A1**

(12) **EUROPEAN PATENT APPLICATION**

(43) Date of publication:
**13.01.2010 Bulletin 2010/02**

(51) Int Cl.:
**G06T 11/00** (2006.01)

(21) Application number: **08305384.3**

(22) Date of filing: **07.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92100 Boulogne-Billancourt (FR)**

(72) Inventors:
• **Zhu, Lihua**
**8 Xue Qing Road,**
**Hai Dian District**
**Beijing 100085 (CN)**

• **Huang, Peijie**
**8 Xue Qing Road,**
**Hai Dian District**
**Beijing 100085 (CN)**
• **Yang, Jiheng**
**8 Xue Qing Road,**
**Hai Dian District**
**Beijing 100085 (CN)**

(74) Representative: **Rittner, Karsten**
**Deutsche Thomson OHG**
**European Patent Operations**
**Karl-Wiechert-Allee 74**
**30625 Hannover (DE)**

(54) **Method and device for video processing to obtain watercolor effect**

(57)    A technique for automatically reproducing real image sequences using the characteristic watercolor appearance is called "watercolorization". A method and device for improved automatic watercolorization of video sequences are provided that lower the required effort for processing video sequences in real-time. According to the invention, a method for electronic processing of a video frame sequence comprises determining (103) a motion field for the pixels of a video frame being part of the sequence, based on at least two preceding frames and at least two following frames of the sequence, filtering (106) the video frame and one or more adjacent frames using spatial and temporal morphological filtering operations, and mapping (108) the pixels of the filtered video frame to a given texture according to the motion field.

Fig.1

EP 2 144 200 A1

## EP 2 144 200 A1

**Description**

Field of the invention

This invention relates to a method and a device for video processing. In particular, the invention provides a solution for generating watercolor effects on video sequences.

Background

Watercolors have two essential characteristics that make them especially beautiful and evocative: distinctive textures, and an ability to suggest detail through abstract washes of color. Therefore, watercolors have attracted some attention in the industry of digital entertainment, and techniques for automatically reproducing real image sequences using the characteristic watercolor appearance have become interesting. This technique is called "watercolorization".
Most approaches generate the watercolor appearance by simulating the serial physical process of pigment diffusion in water. Traditionally, producing such a watercolor-like animation is very laborious since it requires much artist work to draw manually frame by frame. Though techniques have been proposed for computer-generated watercolors, earlier works such as "Interactive Watercolor Animations" (T. Luft / O. Deussen in "Pacific Conference on Computer Graphics and Applications, 2005) are mainly devoted to rendering watercolor images from 3D-scenes. The flexibility of such techniques is however strictly limited by the requirement of having 3D mesh data.
Other watercolorization methods take a still image as input and produce a watercolor-like illustration as output, like "Interactive watercolor rendering with temporal coherence and abstraction", (A.Bousseau, M.Kaplan, J.Thollot, F.Sillioin: SIGGRAPH Symposium on Non-Photorealistic Animation and Rendering, 2006). However, the problem producing a watercolor-like animation from a video sequence input has not yet been solved. Further improvements are required.
A particular problem is providing a real-time system for video, which allows a continuous processing of a video stream. Though image coloring devices can be adapted for better processing performance by specific hardware platforms, the known techniques only handle individual images, and additionally require full user intervention.

Summary of the Invention

The present invention provides a method and device for improved automatic watercolorization of video sequences.
Advantageously, the method and device lowers the required effort for processing video sequences in real-time.
According to one aspect of the invention, a method for electronic video processing of a video frame sequence comprises steps of determining correspondences between the pixels of adjacent video frames being part of the sequence, wherein pixel pairs are obtained, and wherein the determining refers to pixels of a current frame and at least two preceding frames and at least two successive frames of the sequence, filtering the current video frame and one or more adjacent frames, wherein spatial and temporal morphological filtering operations are performed, and mapping the pixels of the filtered video frame to a given texture according to said determined correspondences.
In the step of determining correspondences between the pixels of adjacent video frames, a motion field for the pixels of a video frame may be obtained. The filtering of the video frame and one or more adjacent frames needs not necessarily use all frames that were used for determining the motion field. Pixel correspondences always refer to pairs of pixels, one from a frame and the other from an adjacent frame.
In one embodiment, the frame sequence length is variable, and is adapted according to the content, e.g. length of a scene, amount of motion etc.
In one embodiment, the determination of pixel pairs or a motion field is based on two preceding frames and two successive frames of the sequence, so that the same processing is applied to all but the first two and the last two frames of a sequence. A pixel correspondence list or motion field for the first frame of a sequence can be obtained from the two successive frames (i.e. the 2$^{nd}$ and the 3$^{rd}$ frame). A pixel correspondence list or motion field for the second frame of a sequence can be obtained from one previous and two successive frames (i.e. the 1$^{st}$, 3$^{rd}$ and the 4$^{th}$ frame). Correspondingly, a pixel correspondence list or motion field for the last frame of a sequence can be obtained from only the two preceding frames, and for the second-to-last frame from the two preceding frames and the last frame.
According to another aspect of the invention, a device for electronic processing of a video frame sequence comprises motion estimation means for determining correspondences between the pixels of adjacent video frames being part of the sequence, wherein pixel pairs are obtained, and wherein the determining is based on at least two preceding frames and at least two successive frames of the sequence, filter means for filtering the video frame and one or more adjacent frames, wherein at least one of spatial and temporal morphological filtering operations are performed, and means for mapping the pixels of the filtered video frame to a given texture according to said correspondences.

Advantageously, this leads to the effect that a video object moving during said frame sequence maintains its texture, and texture flickering is prevented. Consequently, texture appears to be a natural part of the video object.

Further objects, features and advantages of the invention will become apparent from a consideration of the following description and the appended claims when taken in connection with the accompanying drawings.

Brief description of the drawings

Exemplary embodiments of the invention are described with reference to the accompanying drawings, which show in

Fig.1 the structure of a video watercolorization framework;
Fig.2 a flow-chart of a video watercolorization process;
Fig.3 motion dependencies between frames in a video sequence used for motion field generation;
Fig.4 exemplary constructing of a motion field for watercolorization of a video sequence; and
Fig.5 components of a device for video watercolorization.

Detailed description of the invention

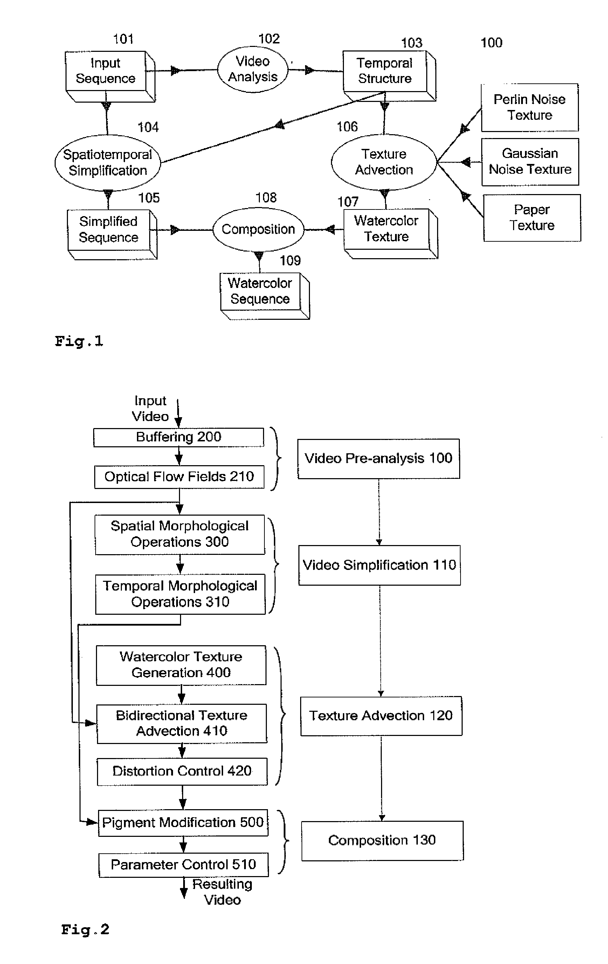

Fig.1 shows a unified framework of video water colorization for generating temporally coherent watercolor-like animation from an image sequence with interactive frame rates. Upon this framework, either software tools or hardware device can be designed. Taking an image sequence or video sequence as input sequence 101, a watercolour-like animation 109 is produced in four main steps: video analysis 102, spatiotemporal simplification 104, texture advection 106 and final composition 108.

The video analysis 102 and spatiotemporal simplification 104 are performed on the same input sequence 101, wherein the video analysis 102 results in a temporal structure 103 of the sequence. The temporal structure 103 can then also be used during the spatiotemporal simplification 104. The simplification 104 generates a simplified sequence 105, i.e. a sequence of images that are simplified. The number of images may remain unchanged, but it may also be advantageous to change the number of images, i.e. the frame rate. Usually this will be a frame-rate reduction.

The temporal structure 103 is also used during a step of texture advection 106. Texture advection means that a motion field is obtained from the image sequence, according to its temporal structure 103, and the motion field and a texture are mapped together. As a result, the texture details are moved according to the motion field of the image sequence at their respective position. That is, if the pixels of a particular macroblock at position x,y are moved according to their local motion field into a particular direction, then also the mapped texture will move into this direction. This gives a more natural impression of the texture of a video object being really part of the object. During watercolorization, the desired texture is generated from a mixture of Perlin noise, Gaussian noise and typical paper texture. Paper texture may e.g. be scanned from real paper. The process of texture advection 106 results in a watercolour texture 107 for each image. The watercolour texture 107 and the simplified sequence 105 are then provided to a composition step 108, which combines both into a watercolour sequence 109. That is, the images of the watercolour sequence are simplified versions of the original video images that have artificial watercolor textures mapped to them.

As mentioned above, each frame of the input sequence is converted to watercolor-like effect by two steps: image simplification and watercolor texture composition and mapping. For example, the simplification step is fulfilled by mathematically morphological operations. Perlin noise, Gaussian noise and scanned paper textures are taken as watercolor textures.

To maintain the coherence between simplified images and watercolor textures, as well as between neighboring frames, a temporal structure, indicating the pixel correspondences between adjacent frames on the time axis, is extracted by video analysis algorithms, e.g. optical flow detection. The simplification process along the time axis is guided by this structure, while the watercolor textures are advected according to the structure frame by frame.

The framework may be implemented using graphics hardware, like Nvidia Geforce 8800 and ATI 1950, or on FPGA platform.

Conventionally, in order to create a stylized effect of an input video or image, physical simulations have to be done, like fluid simulation or simulations on other natural phenomena. While this processing requires a lot of iteration, regression or equation solving, the solution according to the present invention is easier to implement and accelerate.

The present invention uses an empirical model based on an intuitive notion of watercolors to achieve similar effects like the conventional serial physical process of pigment diffusion in water. The invention employs the model of texture saturation for each pixel, i.e. watercolorization is done by only using the color information on the texture and additive Perlin noise, and is not related to fluid physics. That is, the calculations for watercolorization are performed on texture directly.

Advantageously, this is easier to implement in parallel than previous methods. As a consequence, the process can be easily implemented and accelerated using FPGAs, DSPs and other parallel computing devices, like e.g. a Graphics Processing Unit (GPU).

The above-mentioned "interactive frame rates" for the output of the watercolorization may be interesting in the scenario of a video watercolorization process with low latency, e.g. an online application. It may be advantageous also for other applications. A buffering technique to compute the correspondences of pixels is applied. The more frames are buffered, the slower the processing speed will be. Therefore, e.g. in low-latency application, a result video may be produced with different frame rates, depending on how many frames are being buffered. A tunable parameter can be provided to the end user to control the number of frames to be buffered, or the output frame rate (which essentially control the same thing). Thus, the strategy of doing watercolorization can be interactively manipulated.

Fig.2 illustrates a flowchart of the entire video colorization framework according to one aspect of the invention.

The video pre-analysis block 100 extracts a temporal structure that indicates the relationship between the frames, so that the structure can be used for later operations across frames. Those corresponding pixels that represent the same real world object location in different frames are called a pair of pixels. We use the fields of pixel correspondences between adjacent frames in time axis as the temporal structure. It can be calculated by optical flow fields 210 with a buffering technique 200, wherein some images of the input video sequence are buffered.

The video simplification block 110 simplifies the input image sequence, since one of the characteristics of watercolor is the medium's ability to suggest detail with abstract washes of color. Actual, painted watercolor is usually created by a human, using a brush, often of a large size, and therefore represents a scene in a more abstracted way than a photograph. Video simplification of an image can additionally put much of the viewers' attention to the high-level structures, leading the user to neglect trivial features. The simplification process is performed both spatially 300 (e.g. removing details within a single frame) and temporally 310 (e.g. reducing details that appear only in a single frame) to generate a spatio-temporally coherent abstraction.

The texture advection block 120 is responsible for simulating the characteristic textures of watercolor. This step is significant for the entire system, since the textures will make the converted images very close to watercolor painting. The generating of these textures automatically is performed in the watercolor texture generation block 400. Since the invention aims at a video conversion system rather than a single image processor, the watercolor textures are advected across all frames, according to the temporal structure that is extracted in a bidirectional texture advection block 410. More details on the bidirectional texture advection 410 are given below. Advection might introduce distortion, which has to be controlled properly. In the distortion control block 420, artifacts are reduced e.g. by filtering.

The composition block 130 combines together the results of video simplification 110 and texture advection 120 to produce the final watercolor-like animation from the original image sequence. The compositing process is done by modifying 500 abstracted images by advected textures. The system may also provide users with an interactive interface to flexibly control the parameters 510 to produce different styles according to individual preferences. However, this block is optional, e.g. for interactive systems.

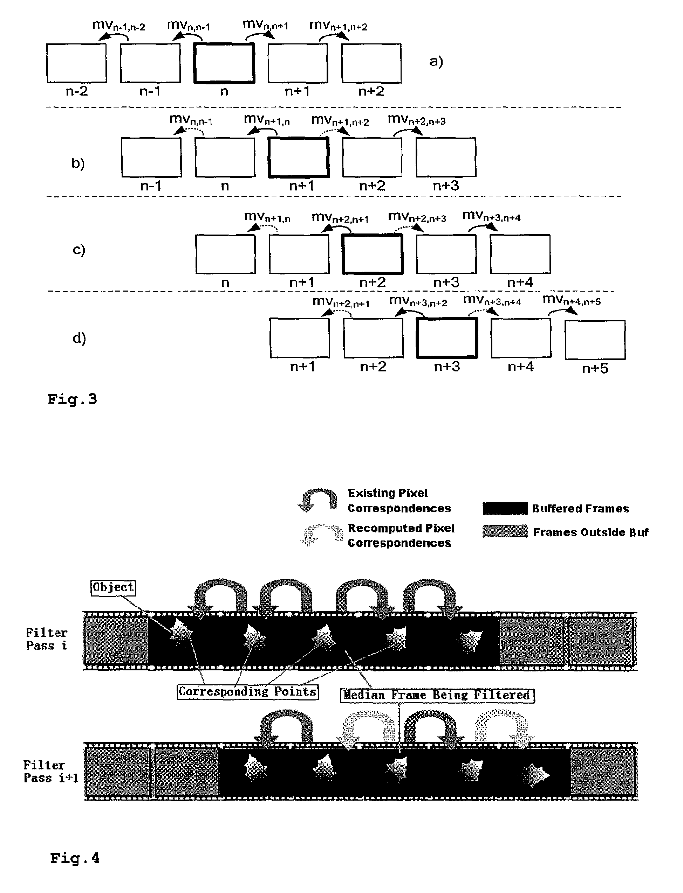

To compute the temporal structure efficiently, the buffering block 200 maintains a buffer for storing a given number of adjacent frames. Since pixel correspondences are only valid within one scene, the buffer is preferably reset when scene change occurs. Normally, calculation of pixel correspondences (e.g. motion estimation) is expensive, no matter whether a software implementation or a hardware platform is used. Therefore such calculations are reduced as far as possible. The buffer 200 is used to reduce the computational burden. Most of the computed results can be reused in a new pass, and only between two frame pairs the pixel correspondences need to be recomputed: between a current and its preceding frame (which has been computed in opposite direction before), and between the first frame and the second frame of the sequence (which results from the processing advancement within the sequence). This is shown in Fig.3, and described in more detail below.

Optical flow fields 210 are used to estimate and determine corresponding pixels in adjacent frames that represent the same object in the real world (or rather: the same video object). The field of optical flow between two frames is computed by computer vision techniques, such as the Lucas-Kanade method[1]. Although optical flow fields are often not fully accurate, the unmatched pairs of pixels in the buffer can be skipped to avoid errors and artifacts. Exemplarily,

[1] Lucas, B.D., Kanade, T.: An iterative image registration technique with an application to stereo vision. In: IJCAI, pp. 674{679 (1981) for a buffer having n frames, 2(n-1) optical flow fields in two directions are maintained as the temporal structure. As to the skipping of unmatched pixels, a number of frames adjacent to current frame are buffered in order to perform filtering. Sometimes the optical flow can't find a matched pixel in the frames before or after current frame. In this case, if no corresponding pixel is found in the frame, this frame is not used to perform filtering for the current pixel. E.g. if five frames are buffered for filtering and currently a specific pixel X is filtered, a corresponding pixel X1 in frame 1 can be found by using optical flow. Likewise, X2 in frame2 and X3 in frame 3 is found. However no corresponding pixel is found in frame 4 and frame 5. Therefore, a filter result is obtained by only considering X1, X2 and X3, and ignoring frame 4 and 5 for the filtering of the pixel X, while otherwise the filter result would be obtained by considering the corresponding X1, X2, X3, X4 and X5 from all five frames.

Video simplification 110 comprises at least spatial and temporal morphological operations 300,310. Mathematical morphology operators are known for their nature of abstracting image colors by efficient local filtering. The two basic operators are dilation and erosion, for spreading the light and dark features respectively. They can be defined as $\delta$ and $\varepsilon$ respectively for a pixel $x$ in an image $I$, where the coordinates are relative to a pixel's neighborhood $B$.

$$\delta_B(I)(\mathbf{x}) = \max_{b \in B}\{I(\mathbf{x}-b)\} \qquad (1.1)$$

$$\varepsilon_B(I)(\mathbf{x}) = \min_{b \in B}\{I(\mathbf{x}+b)\} \qquad (1.2)$$

"Opening", i.e. the removing of light features, is defined as an erosion step followed by a dilation step. "Closing", i.e. the removing of dark features, is a dilation step followed by an erosion step. Simplification of images can be achieved by removing both dark and light features, so that a sequence of one closing followed by one opening is performed.

The morphological operations can be easily performed in the spatial domain, but applying the filtering on each image separately produces much flickering. The reason is that many features appear and disappear from frame to frame, bringing in noticeable "popping" artifacts. Thanks to the temporal structure that was computed before, the artifacts can be reduced by performing another morphological filtering pass along time axis. In the buffer of 2k+1 successive frames, the pixels in the median frame are filtered according to their respective corresponding pixels in the k previous and k following frames.

Watercolor texture generation 400 comprises generating a painting-like texture. In painting, the pigments are mixed with water but do not dissolve totally, and additionally the structure of the canvas remains visible, since the pigments gather in cavities of the paper. Therefore the final pigment density is not constant. This is simulated by low-frequency variations, representing turbulence flow, high-frequency variations representing pigment dispersion and scanned paper structures. Three layers of watercolor textures are added, one for each effect: Perlin noises for the turbulent flow, Gaussian noises for the pigment dispersion and scanned paper for the paper cavities. The first two can be generated automatically in computer or specific hardware while the last one can be obtained by a scanner.

An important element of the invention is the bidirectional texture advection block 410. In order to create effective watercolor animations, the watercolor textures generated in the watercolor texture generation block 400 must satisfy two competing constraints: On one hand, it must maintain its appearance in terms of a more or less homogeneous distribution and frequency spectrum. On the other hand, it must follow the motion in the scene so as not to create a "shower door" effect. To resolve this conflict, the idea of texture advection is employed. Texture advection is done by initializing the texture mapping on the first frame, and then evolving the mapping with the optical flow. The statistical spatial properties of the current texture can be supervised, and the texture mapping may be reinitialized whenever the statistical spatial properties of the current texture become too dissimilar to the original one. We set $\vec{x} = (x, y)$ for scene coordinates and m= (u, v) for texture coordinates. The optical flow is used as a vector field $v = (\vec{x}, t)$. The advection is defined below.

$$m(\vec{x},0) = \vec{x} \qquad (2.1)$$

$$m(\vec{x},t) = m(\vec{x}+v(\vec{x},t),t-1), t > 0 \qquad (2.2)$$

$$v(\vec{x},t) = \vec{x}_{t-1} - \vec{x}_t, t > 0 \qquad (2.3)$$

In this way, a given texture is attached to the moving pixels of the video, which can be understood as displacing the texture coordinates according to the vector field. Since the distortion of the advected texture increases with time, the advection process is performed in a bidirectional manner. That is, "forward" mapping $m_f$ advected from a number k of earlier frames in the sequence is combined with "reverse" mapping $m_r$ advected from the same number of k later frames in the sequence (if the same number of earlier and later frames is available). The final advected pigment texture is defined as:

$$P'(\vec{x},t) = w_f(\vec{x},t)P_0(m_f(\vec{x},t)) + w_r(\vec{x},t)P_0(m_r(\vec{x},t)) \qquad (3)$$

By precisely measuring the distortion and then computing the two weights $w_f$ and $w_r$ the distortion is reduced to an acceptable level. Moreover, a period is chosen to reset the distortion and to reuse the original texture periodically. In this way, the system can handle videos of any length. The distortion can be measured through estimating the visual quality of a distorted texture at each pixel, e.g. computing a deformation tensor and setting an appropriate deformation threshold for distortion. By the distortion estimated, we adjust $w_f$ and $w_r$ so that the weights are inversely related to the texture distortion, gradually decreasing to 0 at regeneration events in order to maintain overall temporal continuity.

The purpose of Pigment Modification 500 and Parameter Control 510 is to modify the composition according to given requirements, e.g. user preferences. The computed watercolor textures are applied on the abstracted image sequences using a pigment modification, as eq.4 below, where *T* is one layer of watercolor texture and *C* is the abstracted pixel, β is the weight of each layer and *C'* is the final result. Eq.4 reflects pigment density, which can be thought of as a result of light interacting with a varying number of semi-transparent layers.

$$C' = C - \beta(C - C^2)(T - 0.5) \qquad (4)$$

The three effects mentioned in the watercolor generation block 400 are applied as *T* in sequence and each can be controlled independently. The parameter β can be used to control how much this kind of texture affects the final appearance.

Additionally, two typical watercolor effects are added to simulate the fluid nature of watercolor along the borders of colored regions: edge darkening due to pigment migration and a wobbling effect due to paper grain. The width and heaviness of the edge to be darkened can also be controlled by a user. Other control parameters are the period of the regeneration or the size of buffer, the size of the morphological element structure (e.g. filter length), and the window size for optical flow operations; these can also be accessed from the control panel. One advantage is that it is possible to flexibly use the system to produce various animation styles.

Fig.3 a) shows an exemplary sequence of frames n-2,... n+2. For a current frame n, a first motion field (i.e. a list of pixel correspondences) $mv_{n,n-1}$ is calculated that describes the correspondences between the previous frame n-1 and the current frame n, with the current frame n as basis. It is therefore in principle a backward motion field. Further, a second motion field $mv_{n+1,n+2}$ is calculated, describing the correspondences between the next frame n+1 and the following frame n+2, with the next frame n+1 as basis. It is therefore in principle a forward motion field.

Assuming that the sequence (and in particular the current scene) has more frames before frame n-2, the backward motion field $mv_{n-1,n-2}$ between previous frame n-1 and preceding frame n-2 has already been calculated before. Also the forward motion field $mv_{n,n+1}$ between current frame n and next frame n+1 has already been calculated before. These motion fields, or rather lists of corresponding pixel pairs, have previously been stored and are now re-used. As a general principle, each calculated motion field within a sequence is stored, since it can be used at least twice. Exceptions are at the beginning and at the end of a scene, where motion fields may be used only once and therefore need not necessarily be stored.

As a result, only two motion fields ($mv_{n,n-1}$ and $mv_{n+1,n+2}$) need to be calculated for a current frame n, while four motion fields are utilized for extracting the motion information for texture advection. Thus, a smooth motion of the texture can be achieved, since previous and subsequent frames are analyzed for motion estimation.

When the processing moves on to the next frame n+1 being the current frame, as shown in Fig.3 b), the backward motion field $mv_{n,n-1}$ between previous and preceding frames from the above-described processing can be re-used. It is therefore retrieved from the storage, instead of being calculated again. The same applies to the forward motion field $mv_{n+1,n+2}$ that has been calculated before. Corresponding to the above-described case, only two motion fields $mv_{n+1,n}$ and $mv_{n+2,n+3}$ need to be newly generated, one backward and one forward. Again, both are stored for later re-usage.

Generally for the case of two preceding and two following frames being used, for a particular frame only its own backward motion field and its successor's forward motion field need to be calculated, while its predecessors backward motion field and its own forward motion field can be re-used (wherein the terms predecessor and successor refer to the order of processing and display).

More generally, if more preceding and/or following frames are used, even more motion fields can be re-used. The number of preceding frames can even be different from the number of following frames. This may be the case for all frames, according to the employed structure, but it may also be the case for only the first k and/or last k frames of a sequence. If e.g. for a current frame n the frames n-3, n-2, n-1, ... , n+3 are used for motion field extraction, six motion fields are required, from which four (namely two backward and two forward motion fields) need not be calculated since they can be re-used. As a general rule, only two motion fields need to be newly calculated, independent from the number of frames used for motion field extraction. However, the number of motion fields to be stored will be limited, so that the above-described configuration using two previous and two following frames is a good compromise.

If the current frame n happens to be the first or second frame of a sequence (e.g. a scene), different solutions are possible. In one embodiment, for the first frame only the two following forward motion fields are calculated, and for the second frame only one backward motion field and the two forward motion fields are calculated.

Fig.4 shows the usage of existing pixel correspondences (similar to motion vectors making a motion field) and recomputed pixel correspondences in a filter pass i and the next filter pass i+1. For pixels in a median frame being filtered, the corresponding points in neighboring frames are determined during the re-computing of pixel correspondences, while existing pixel correspondences are re-used. In particular it is to be noted that it is necessary to re-compute backward pixel correspondences between two frames even if forward pixel correspondences between the same two frames has already been computed before. The reason is that there may occur differences, e.g. with respect to objects that appear or disappear. The existing correspondences can however be used as a guideline.

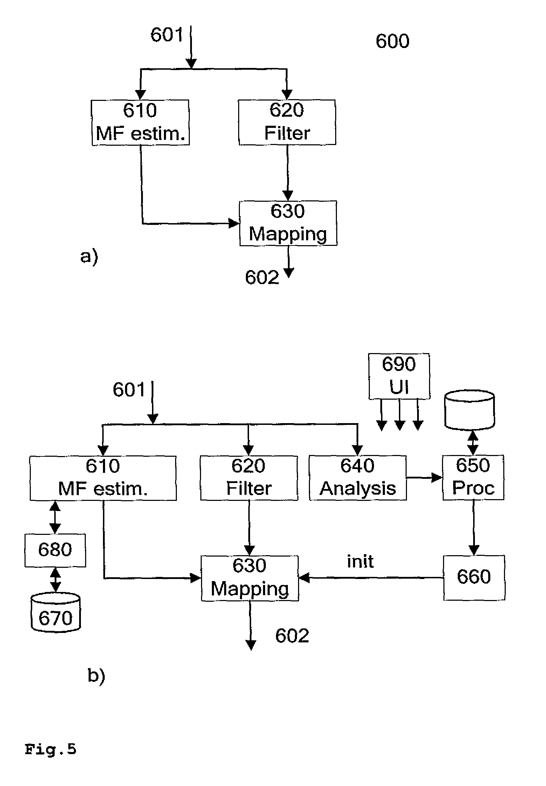

As shown in Fig.5 a), according to one aspect of the invention a device 600 for electronic processing of a video frame sequence 601 comprises motion estimation means 610 for determining pixel correspondences for the pixels of a video frame being part of the sequence, wherein the determining is based on frame pairs among at least two preceding frames and at least two successive frames of the sequence, filter means 620 for filtering the video frame and one or more adjacent frames, wherein at least one of spatial and temporal morphological filtering operations are performed, and mapping means 630 for mapping the pixels of the filtered video frame to a given texture according to said motion field, wherein a video object moving during said sequence maintains its texture. Further embodiments are shown in Fig. 5b).

In one embodiment, the device further comprises analyzing means 640 for determining statistical spatial properties of the moving video object, wherein said properties comprise at least texture homogeneity and/or frequency spectrum, comparison means 650 (e.g. processor) for comparing said statistical spatial properties with the statistical spatial properties of said moving video object in a preceding frame of the sequence, wherein the comparison results in one or more numeric values (at least in principle, because it may be compared to a threshold), and initializing means 660 for re-initializing the texture mapping for said moving video object if at least one of said numeric values is outside a given range. The comparison may also comprise a threshold check and result in a signal that enables the initializing means if the statistical spatial properties of said moving video object changed too much.

In one embodiment, wherein for a current frame N a motion field between the two successive frames N+1 and N+2 is determined, the device further comprises buffer means 670 for storing said determined motion field between the two successive frames N+1 and N+2, and means 680 for providing data for processing the next frame of the sequence, wherein at least the stored motion field between the two successive frames N+1 and N+2 is retrieved and re-used for processing the next frame of the sequence.

In one embodiment, wherein for a current frame N a motion field between said current frame N and the preceding frame N-1 is determined, the device further comprises buffer means 671 for storing said determined motion field between the current frame N and the preceding frame N-1, and means 681 for providing data for processing the next frame of the sequence, wherein at least the stored motion field between the current frame N and the preceding frame N-1 is retrieved and re-used for processing the next frame of the sequence. In both embodiments, the buffer means 670,671 may but need not be identical to each other, and/or the means for providing data 680,681 may but need not be identical to each other.

In one embodiment, the device comprises user interface means 690 for interactively adjusting the number of video frames on which the temporal morphological filtering operations are based.

In one embodiment, the device further comprises processing means for determining a region of coherent texture within the frame, e.g. within the motion field estimation means 610, means for performing edge darkening along the borders of said region, wherein the pixel luminance is reduced, and means for wobbling, wherein the luminance reduction is varied. The two latter may be part of e.g. the mapping means 630.

The real process of the mixture of color pigments and water on a piece of paper is in nature rather complex. It is very difficult to simulate in computers, so that existing solutions are quite time consuming and not usable for real-time processing. The present disclosure focuses on the final watercolor effect of the process, and treats it as the combination of image simplification and watercolor textures. Therefore, it is possible to achieve the final result in real time for each frame in principle by only a morphological step and a texture modification step.

The above-mentioned morphology is a theory and technique for the analysis and processing of geometrical structures, based on set theory, lattice theory, topology, and random functions. Morphological operations are usually applied to digital images, graphs or surface meshes. Morphological image processing uses a set of operators to transform images according to topological and geometrical continuous-space concepts like size, shape, connectivity, convexity, and geodesic distance.

The term "texture" means the visible structure of a part of an image, like e.g. a pattern, structure etc. Texture may generally also refer to tactile or sensible characteristics like e.g. canvas in the case of paintings.

As described above, a temporal structure is extracted from an image sequence. This structure, indicating the pixel correspondences between adjacent frames in time axis, can then be used to keep the temporal coherence of simplified results and watercolor textures in each frame.

One example application is a water colorization software plug-in based on the disclosed processing framework. Another example application is a device for producing watercolor movies from real video clips according to the disclosed framework.

It will be understood that the present invention has been described purely by way of example, and modifications of detail can be made without departing from the scope of the invention. Each feature disclosed in the description, claims and drawings (where appropriate) may be provided independently or in any appropriate combination. Features may, where appropriate be implemented in hardware, software, or a combination of the two. Reference numerals appearing in the claims are by way of illustration only and shall have no limiting effect on the scope of the claims.

**Claims**

1. A method for electronic video processing of a video frame sequence, comprising steps of

   - determining (103) correspondences between the pixels of adjacent video frames being part of the sequence, wherein the determining refers to pixels of a current frame and at least two preceding frames and at least two successive frames of the sequence;
   - filtering (106) the current video frame and one or more adjacent frames, wherein spatial and temporal morphological filtering operations are performed; and
   - mapping (108) the pixels of the filtered video frame to a given texture according to said determined correspondences.

2. Method according to claim 1, wherein the frame sequence length is variable, according to the content, and wherein the same processing is applied to all except the first two and the last two frames of a sequence.

3. Method according to claim 1 or 2, further comprising steps of

   - determining statistical spatial properties of a moving video object, wherein said properties comprise at least texture homogeneity and/or frequency spectrum;
   - comparing said statistical spatial properties with the statistical spatial properties of said moving video object in a preceding frame of the sequence, wherein the comparison results in one or more numeric values; and
   - re-initializing the texture mapping for said moving video object if at least one of said numeric values is outside a given range.

4. Method according to claim 1, 2 or 3, wherein for a current frame **n** a motion field between the two successive frames **n+1** and **n+2** is determined, further comprising steps of

   - storing said determined motion field between the two successive frames **n+1** and **n+2;** and
   - re-using the stored motion field between the two successive frames **n+1** and **n+2** for processing the next frame of the sequence.

5. Method according to one of the claims 1-4, wherein for a current frame **n** a motion field between said current frame **n** and the preceding frame **n-1** is determined, further comprising steps of

   - storing said determined motion field between the current frame **n** and the preceding frame **n-1;** and
   - re-using the stored motion field between the current frame **n** and the preceding frame **n-1** for processing the next frame of the sequence.

6. Method according to one of the claims 1-5, wherein the number of video frames on which the temporal morphological filtering operations are based are interactively adjusted.

7. Method according to one of the claims 1-6, wherein the step of filtering comprises a first sub-step of spatial filtering of the current frame and a subsequent second sub-step of temporal filtering the spatially filtered current frame and said adjacent frames, and wherein the spatial filtering comprises dilation and erosion operations.

8. Method according to one of the claims 1-7, wherein said given texture is composed as a mixture of Perlin noise, Gaussian noise and scanned paper texture.

9. Method according to one of the claims 1-8, further comprising steps of

    - determining regions of coherent texture within the frame; and
    - along the borders of said region, performing edge darkening, wherein the pixel luminance is reduced, and wobbling, wherein the luminance reduction is varied.

10. Device for electronic video processing of a video frame sequence, comprising steps of

    - means (610) for determining correspondences between the pixels of adjacent video frames being part of the sequence, wherein the determining refers to pixels of a current frame and at least two preceding frames and at least two successive frames of the sequence;
    - means (620) for filtering the current video frame and one or more adjacent frames, wherein spatial and temporal morphological filtering operations are performed; and
    - means (630) for mapping the pixels of the filtered video frame to a given texture according to said determined correspondences.

11. Device according to claim 10, further comprising

    - means (640) for determining statistical spatial properties of a moving video object, wherein said properties comprise at least texture homogeneity and/or frequency spectrum;
    - means (650) for comparing said statistical spatial properties with the statistical spatial properties of said moving video object in a preceding frame of the sequence, wherein the comparison results in one or more numeric values; and
    - means (660) for re-initializing the texture mapping for said moving video object if at least one of said numeric values is outside a given range.

12. Device according to claim 10 or 11, wherein for a current frame **n** a motion field between the two successive frames **n+1** and **n+2** is determined, further comprising

    - means (670) for storing said determined motion field between the two successive frames **n+1** and **n+2;** and
    - means (680) for re-using the stored motion field between the two successive frames **n+1** and **n+2** for processing the next frame of the sequence.

13. Device according to one of the claims 10-12, wherein for a current frame **n** a motion field between said current frame **n** and the preceding frame **n-1** is determined, further comprising

    - means (670) for storing said determined motion field between the current frame **n** and the preceding frame **n-1;** and
    - means (680) for re-using the stored motion field between the current frame **n** and the preceding frame **n-1** for processing the next frame of the sequence.

14. Device according to one of the claims 10-13, further comprising

    - means for determining regions of coherent texture within the frame; and
    - means for performing edge darkening along the borders of said region, wherein the pixel luminance is reduced, and means for performing wobbling, wherein the luminance reduction is varied.

Fig.1

Fig.2

**Fig.3**

**Fig.4**

Fig.5

EP 2 144 200 A1

**EUROPEAN SEARCH REPORT**

Application Number

EP 08 30 5384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUSSEAU A ET AL: "Video watercolorization using bidirectional texture advection" ACM TRANSACTIONS ON GRAPHICS ACM USA, vol. 26, no. 3, July 2007 (2007-07), pages 104-1, XP002510828 ISSN: 0730-0301 | 1-8, 10-13 | INV. G06T11/00 |
| Y | Sections 1,3,3.1,3.2,3.5,4.2 ----- | 9,14 | |
| D,Y | BOUSSEAU A ET AL: "Interactive watercolor rendering with temporal coherence and abstraction" NPAR SYMPOSIUM ON NON-PHOTOREALISTIC ANIMATION AND RENDERING - PROCEEDINGS NPAR 2006 - 4TH INTERNATIONAL SYMPOSIUM ON NON-PHOTOREALISTIC ANIMATION AND RENDERING 2006 ASSOCIATION FOR COMPUTING MACHINERY US, vol. 2006, 2006, pages 141-149, XP002510829 Section 4.1.3 ----- | 9,14 | |
| A | NEYRET F ED - SPENCER S N (ED): "ADVECTED TEXTURES" ACM SIGGRAPH SYMPOSIUM ON COMPUTER ANIMATION. SAN DIEGO, CA, JULY 26 - 27, 2003; [ACM SIGGRAPH SYMPOSIUM ON COMPUTER ANIMATION], NEW YORK, NY : ACM, US, 26 July 2003 (2003-07-26), pages 147-153, XP001233117 ISBN: 978-1-58113-659-3 Sections 1.3,1.4,2 ----- -/-- | 1-14 | TECHNICAL FIELDS SEARCHED (IPC) G06T |

The present search report has been drawn up for all claims

| Place of search | Date of completion of the search | Examiner |
|---|---|---|
| The Hague | 19 January 2009 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**EUROPEAN SEARCH REPORT**

Application Number

EP 08 30 5384

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | HAYS J ET AL: "IMAGE AND VIDEO BASED PAINTERLY ANIMATION" PROCEEDINGS NPAR 2004. 3RD. INTERNATIONAL SYMPOSIUM ON NON-PHOTOREALISTIC ANIMATION AND RENDERING. ANNECY, FRANCE, JUNE 7 - 9, 2004; [SYMPOSIUM ON NON - PHOTOREALISTIC ANIMATION AND RENDERING], NEW YORK, NY : ACM, US, 7 June 2004 (2004-06-07), pages 113-120, XP001210029 ISBN: 978-1-58113-887-0 * the whole document * ----- | 1-14 | |
| A | SAND P ET AL: "Particle Video: Long-Range Motion Estimation using Point Trajectories" COMPUTER VISION AND PATTERN RECOGNITION, 2006 IEEE COMPUTER SOCIETY CO NFERENCE ON NEW YORK, NY, USA 17-22 JUNE 2006, PISCATAWAY, NJ, USA,IEEE, vol. 2, 17 June 2006 (2006-06-17), pages 2195-2202, XP010923123 ISBN: 978-0-7695-2597-6 ----- | 1,10 | TECHNICAL FIELDS SEARCHED (IPC) |

The present search report has been drawn up for all claims

| Place of search | Date of completion of the search | Examiner |
|---|---|---|
| The Hague | 19 January 2009 | Almeida Garcia, B |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. Luft ; O. Deussen.** Interactive Watercolor Animations. *Pacific Conference on Computer Graphics and Applications,* 2005
- **A.Bousseau ; M.Kaplan ; J.Thollot ; F.Sillioin.** Interactive watercolor rendering with temporal coherence and abstraction. *SIGGRAPH Symposium on Non-Photorealistic Animation and Rendering,* 2006

- **Lucas, B.D. ; Kanade, T.** An iterative image registration technique with an application to stereo vision. *IJCAI,* 1981, 674-679